# FASCICULE DE BREVET EUROPEEN

(11) **EP 1 172 580 B1**
(45) Date de publication et mention de la délivrance du brevet: **31.08.2005**
(21) Numéro de dépôt: 01401729.7
(22) Date de dépôt: 28.06.2001
(51) Int. Cl.: F16F 9/348

(54) **Dispositif d'amortissement à structure simplifiée**
Dämpfungsvorrichtung mit vereinfachter Struktur
Damping device having simplified structure

(30) Priorité: 13.07.2000 FR 0009234; 23.11.2000 FR 0015138
(43) Date de publication de la demande: 16.01.2002
(73) Titulaire: Peugeot Citroen Automobiles SA, 92200 Neuilly sur Seine (FR)
(72) Inventeur: Mennesson, Dominique, 94700 Maisons-Alfort (FR)
(74) Mandataire: Bentz, Jean-Paul

(56) Documents cités:
- EP-A- 0 889 258
- DE-A- 19 729 289
- FR-A- 2 609 131
- US-A- 3 837 445
- US-A- 4 819 773
- US-A- 5 115 892
- PATENT ABSTRACTS OF JAPAN vol. 015, no. 501 (M-1193), 18 décembre 1991 (1991-12-18) & JP 03 219132 A (ATSUGI UNISIA CORP), 26 septembre 1991 (1991-09-26)

## Description

La présente invention concerne de façon générale le domaine des systèmes d'amortissement à laminage hydraulique, du type de ceux qui sont notamment utilisés dans les suspensions de véhicules automobiles.

Plus précisément, l'invention concerne un dispositif d'amortissement à laminage hydraulique pour amortir des oscillations de pression s'exerçant entre des premier et second volumes de fluide hydraulique, ce dispositif comprenant un séparateur cylindrique présentant un axe principal et portant des moyens de clapet anti-retour tarés de premier et second types à flux mutuellement croisés et un palier d'étanchéité périphérique de premier diamètre séparant les deux volumes de fluide, les moyens de clapet du premier type comprenant une première série de canaux traversant le séparateur et un premier obturateur à lame flexible disposé dans le premier volume de fluide et élastiquement sollicité vers une première face axiale du séparateur, et les moyens de clapet du second type comprenant une seconde série de canaux traversant le séparateur et un second obturateur à lame flexible disposé dans le second volume de fluide et élastiquement sollicité vers une seconde face axiale du séparateur.

Les dispositifs de ce type sont bien connus dans l'art antérieur, notamment pour leur utilisation dans les suspensions de véhicules automobiles, et sont par exemple illustrés par les documents de brevets FR - 2 609 131 et FR - 2 767 373.

En effet, la suspension d'un véhicule a pour rôle de filtrer et de réduire les chocs provoqués par le déplacement du véhicule sur les inégalités de la route, de permettre à chaque roue de rester toujours en contact avec le sol, et de conserver une assiette de caisse la plus constante possible.

Cette fonction est réalisée en interposant entre la caisse et les roues un élément élastique, généralement un ressort, dont il faut amortir le mouvement oscillatoire par un amortisseur, ce dernier devant simultanément freiner les oscillations de la caisse et celles des roues, afin d'éviter le rebondissement des roues sur le sol.

Une des technologies actuellement les plus répandues pour remplir cette fonction d'amortissement consiste à dissiper l'énergie des oscillations par un laminage d'huile entre deux chambres.

Pour ce faire, et comme le montrent les documents de brevets précédemment cités, l'huile est contrainte à ne pouvoir passer de l'une de ces chambres à l'autre qu'à travers des canaux calibrés, dont certains au moins sont obturés par des lamelles métalliques élastiques ou diaphragmes élastiquement déformables qui ne peuvent être déplacés de leur position de repos que par une force minimale non nulle, et qui n'autorisent donc un écoulement d'huile d'une chambre à l'autre que s'ils sont effectivement déplacés de leur position de repos par une différence de pression suffisante entre les deux chambres.

Cette conception souffre cependant d'une contrainte de réalisation qui réside dans le fait que les canaux qui forment les deux séries de canaux à flux croisés ne peuvent être correctement bouchés par les obturateurs que s'ils sont disposés à la périphérie des faces axiales du séparateur.

Or, cette contrainte, qui tend à réduire le rapport de l'aire totale des canaux à l'aire de chacune des faces axiales du séparateur, impose en pratique de disposer les canaux des deux séries en quinconce, et de ménager des variations de section le long des canaux et / ou d'accepter des pertes de charges indésirables élevées.

Dans ce contexte, la présente invention a pour but de proposer un dispositif d'amortissement permettant de s'affranchir de cette contrainte de réalisation.

A cette fin, le dispositif de l'invention, par ailleurs conforme à la définition générique qu'en donne le préambule ci-dessus, est caractérisé en ce que les première et seconde faces axiales du séparateur sont creusées pour définir des première et seconde chambres respectives bordées par des premier et second sièges annulaires respectifs de clapet, qui présentent un diamètre maximal inférieur au premier diamètre, et sur lesquels s'appuient respectivement les premier et second obturateurs, en ce que les canaux de la première série relient la première chambre à des interstices radiaux s'ouvrant dans le second volume de fluide entre le second obturateur et le palier, et en ce que les canaux de la seconde série relient la seconde chambre à un interstice annulaire s'ouvrant dans le premier volume de fluide entre le premier obturateur et le palier.

Grâce à cet agencement, qui permet au dispositif de l'invention de ne comporter que deux sièges annulaires, l'obturation de ces derniers est simple à réaliser, d'autant plus que ces sièges peuvent présenter un diamètre relativement important et une symétrie axiale.

De surcroît, cet agencement constitue une structure de base à partir de laquelle il est possible de définir diverses variantes du dispositif qui présentent entre elles un nombre très important de composants communs.

Cette possibilité est avantageusement mise à profit pour réaliser un dispositif dans lequel l'amortissement à basse vitesse est différencié selon la direction du déplacement du fluide entre les deux chambres, en vue d'améliorer le compromis confort / comportement.

Actuellement, la différentiation de l'amortissement à basse vitesse est réalisé par l'utilisation de deux canaux basse vitesse (un pour chaque sens de circulation du fluide), dont l'ouverture est contrôlée par des clapets d'orifices.

Ces clapets sont définis par un tarage et une inertie fortement réduits pour s'ouvrir le plus tôt possible après une inversion de sens de la différence de pression entre les premier et second volumes.

Néanmoins, l'amortissement fait apparaître une surtension qui augmente avec la fréquence du déplacement, dans la mesure où il faut toujours ouvrir un clapet pour faire passer le fluide hydraulique.

Grâce à la structure donnée au dispositif de l'invention, il est possible de minimiser la surtension à l'ouverture à l'aide d'une architecture qui réduise le nombre et l'inertie des clapets, tout en gardant une communauté maximale de composants quel que soit le type choisi de différentiation de l'amortissement basse vitesse.

Dans cette perspective, le dispositif de l'invention comprend un clapet anti-retour additionnel, qui est logé dans l'une des chambres, et par exemple dans la première chambre.

Selon une première variante du dispositif de l'invention, le clapet anti-retour additionnel appartient aux moyens de clapet anti-retour du premier type et comprend des troisièmes sièges de clapets dont chacun entoure l'un des canaux de la première série, un troisième obturateur élastiquement sollicité vers les troisièmes sièges, et au moins un orifice percé dans le premier obturateur et faisant communiquer la première chambre avec le premier volume.

Dans ce cas, le clapet anti-retour additionnel peut comprendre un ressort en lame appliquant le troisième obturateur vers les troisièmes sièges.

Selon une seconde variante du dispositif de l'invention, le clapet anti-retour additionnel appartient aux moyens de clapet anti-retour du second type et comprend au moins un orifice percé dans le premier obturateur et faisant communiquer la première chambre avec le premier volume, et un quatrième obturateur élastiquement sollicité vers le premier obturateur en regard de chaque orifice.

Dans ces deux variantes, le dispositif de l'invention comprend de préférence aussi un moyen de fuite permanente, comprenant un passage de fuite percé dans l'un au moins des premier et second sièges annulaires et faisant communiquer les premier et second volumes entre eux de façon permanente.

La présence d'un tel passage basse vitesse commun et permanent permet de minimiser les surtensions en supprimant les effets de seuil d'ouverture des clapets d'orifice.

Dans tous les cas, les canaux peuvent traverser le séparateur pratiquement à n'importe quel endroit, de sorte que les première et seconde séries de canaux peuvent être réparties sur deux rangées, ou même plus de deux rangées, autour de l'axe principal.

Dans le mode de réalisation préféré du dispositif de l'invention, les premier et second obturateurs sont appliqués sur les premier et second sièges annulaires respectifs de clapet par une précontrainte élastique que leur imprime une broche de maintien sous contrainte traversant axialement le séparateur et les obturateurs, et portant des première et seconde butées qui contraignent les deux obturateurs à se rapprocher l'un de l'autre.

Pour simplifier la fabrication du séparateur, ce dernier peut comprendre un corps cylindrique traversé par les canaux et un couvercle rapporté, ce couvercle étant appliqué sur le corps cylindrique, définissant la première ou la seconde chambre, et étant traversé par au moins un perçage reliant cette chambre aux canaux de la première ou de la seconde série de canaux.

Pour pouvoir facilement modifier à volonté les lois d'écoulement du fluide entre les deux volumes, le dispositif de l'invention peut aussi comprendre, notamment, des premier et second disques de maintien sous contrainte élastiquement flexibles et respectivement superposés aux premier et second obturateurs, chaque disque étant coaxial à l'obturateur respectif, élastiquement appliqué contre lui, de diamètre inférieur ou égal au diamètre de l'obturateur respectif, et externe à la chambre obturée par l'obturateur respectif.

Dans ce cas, il est possible, en utilisant une broche de maintien sous contrainte équipées de deux butées, de faire en sorte que les disques de maintien sous contrainte, les obturateurs, le corps cylindrique et le couvercle rapporté soient enserrés entres les première et seconde butées sous contrainte élastique par flexion des obturateurs et des disques.

Dans le mode de réalisation le plus simple et le plus efficace du dispositif de l'invention, les premier et second sièges annulaires de clapet sont conformés en couronnes circulaires.

Enfin, le couvercle rapporté présente de préférence une symétrie axiale, afin de ne pas nécessiter d'indexage lors de l'assemblage.

D'autres caractéristiques et avantages de l'invention ressortiront clairement de la description qui en est faite ci-après, à titre indicatif et nullement limitatif, en référence aux dessins annexés, dans lesquels :
- La figure 1 est une vue en coupe longitudinale du dispositif de l'invention, c'est-à-dire une vue en coupe réalisée dans un plan qui contient l'axe principal;
- La figure 2 est une vue en coupe transversale du dispositif de l'invention, et plus précisément une vue en coupe réalisée suivant l'incidence repérée par les flèches II-II de la figure 1, et à échelle réduite;
- La figure 3 est une vue en coupe semblable à la figure 1, mais représentant un première variante du dispositif de l'invention; et
- La figure 4 est une vue en coupe semblable à la figure 1, mais représentant un seconde variante du dispositif de l'invention.

L'invention concerne un dispositif d'amortissement à laminage hydraulique pour amortir des oscillations de pression s'exerçant entre des premier et deuxième volumes 1, 2 de fluide hydraulique, représentés respectivement au-dessus et au-dessous du séparateur 3, ce dernier étant interposé entre ces deux volumes.

Ce séparateur 3, qui prend par exemple la forme d'un cylindre centré sur un axe principal X, présente deux faces 31, 32 respectivement tournées vers les volumes 1 et 2, et est traversé par deux séries de canaux, à savoir des canaux 40 et des canaux 50.

Ce séparateur 3 porte un palier d'étanchéité périphérique 6 qui présente un diamètre D1 et qui sépare les deux volumes de fluide 1, 2, et des clapets anti-retour tarés qui font plus spécifiquement l'objet de l'invention.

Ces clapets anti-retour appartiennent à un premier ou à un second type, selon qu'ils interdisent un flux de fluide du premier volume 1 vers le second volume 2, ou un flux de fluide du second volume 2 vers le premier volume 1.

Les clapets du premier type comprennent, outre la série des canaux 40 qui traversent le séparateur 3, un premier obturateur 41 à lame flexible qui est disposé dans le premier volume de fluide 1 et qui est élastiquement sollicité vers la face axiale 31 du séparateur 3.

De façon semblable, les clapets du second type comprennent, outre la série des canaux 50 qui traversent le séparateur 3, un second obturateur 52 à lame flexible qui est disposé dans le second volume de fluide 2 et qui est élastiquement sollicité vers la face axiale 32 du séparateur 3.

Selon un premier aspect de l'invention, les deux faces axiales 31 et 32 du séparateur 3 sont creusées pour définir des chambres respectives 310 et 320, qui sont bordées par des sièges annulaires de clapet respectifs 311 et 322 prenant de préférence la forme de couronnes circulaires.

Les sièges 311 et 322 présentent un diamètre maximal D qui est inférieur au diamètre D1 du séparateur, et offrent respectivement un appui aux obturateurs 41 et 52.

Selon un second aspect de l'invention, les canaux 40 de la première série de canaux relient la chambre 310 à des interstices radiaux 22 qui s'ouvrent dans le second volume de fluide 2 entre le second obturateur 52 et le palier 6.

Et selon un troisième aspect de l'invention, les canaux 50 de la seconde série de canaux relient la chambre 320 à un interstice annulaire 11 qui s'ouvre dans le premier volume de fluide 1 entre le premier obturateur 41 et le palier 6.

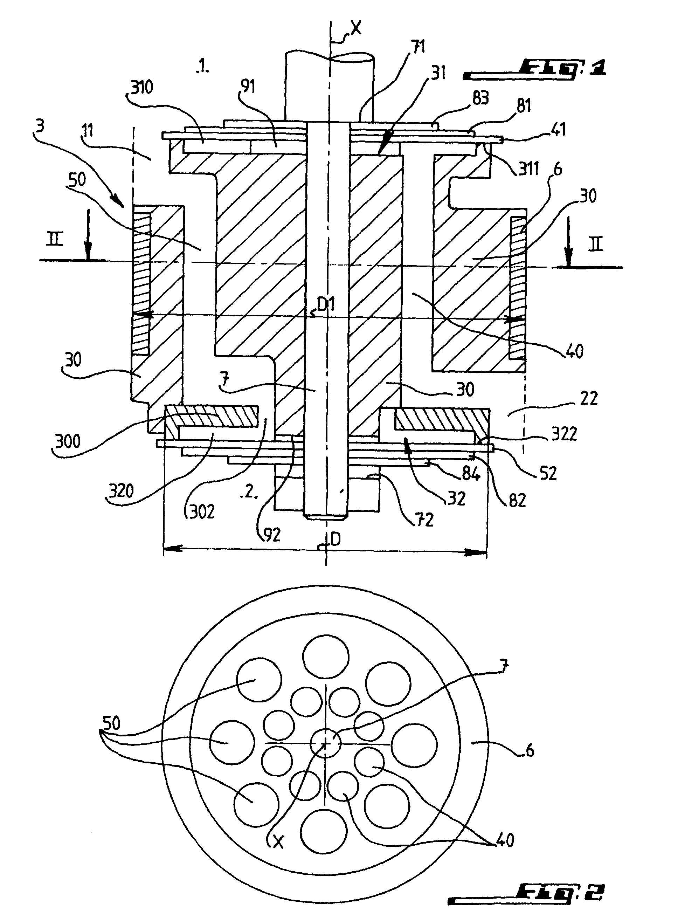

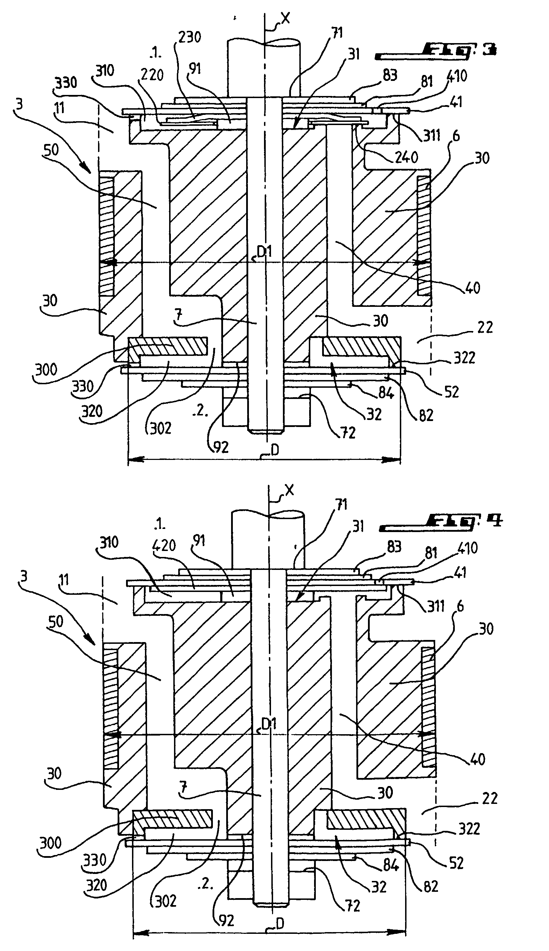

Comme le montre la figure 2, les première et seconde séries de canaux 40 et 50 peuvent être réparties sur deux rangées, ou plus de deux rangées, autour de l'axe principal X, de sorte que les pertes de charges subies par le fluide et dues à la traversée du séparateur 3 peuvent être considérablement réduites.

Les obturateurs 41 et 52 sont par exemple appliqués sur les sièges de clapet respectifs 311 et 322 par une précontrainte élastique que leur imprime une broche de maintien sous contrainte 7 traversant axialement le séparateur 3 et les obturateurs 41 et 52, et portant des butées 71 et 72 qui contraignent les obturateurs 41 et 52 à se rapprocher l'un de l'autre.

Pour permettre une réalisation aisée du séparateur 3, ce dernier est de préférence constitué par un corps cylindrique 30 traversé par les canaux 40 et 50, et par un couvercle rapporté 300.

Ce couvercle rapporté, qui définit l'une ou l'autre des chambres 310 et 320, par exemple la chambre 320, est traversé par un ou plusieurs perçages, tels que 302, qui relient cette chambre 320 aux canaux 50 de série de canaux correspondante, et est appliqué sur le corps cylindrique 30 avec une force élastique suffisante pour permettre au corps cylindrique 30 et au couvercle rapporté 300 de se comporter, vis-à-vis du fluide hydraulique, comme une seule pièce.

Pour ce faire, le dispositif d'amortissement de l'invention comprend avantageusement des disques de maintien sous contrainte, tels que 81, 82, 83, et 84, élastiquement flexibles et appuyés sur les obturateurs 41 et 52, à l'extérieur des chambres 310 et 320.

Plus précisément, les disques 81 et 83 sont coaxiaux à l'obturateur 41 et élastiquement appliqués contre lui, le disque le plus externe 83 ayant un diamètre inférieur au diamètre du disque intermédiaire 81, qui a lui-même un diamètre inférieur au diamètre de l'obturateur 41.

De même, les disques 82 et 84 sont coaxiaux à l'obturateur 52 et élastiquement appliqués contre lui, le disque le plus externe 84 ayant un diamètre inférieur au diamètre du disque intermédiaire 82, qui a lui-même un diamètre inférieur au diamètre de l'obturateur 52.

Comme le montre la figure 1, les disques de maintien sous contrainte 81 à 84, les obturateurs 41 et 52, le corps cylindrique 30, et le couvercle rapporté 300 sont enserrés entres les butées 71 et 72 de la broche 7 et sont soumis à une contrainte élastique qui résulte essentiellement de la flexion des obturateurs 41 et 52, et des disques 81 à 84.

Comme le montre également cette figure, l'une des butées 71 de la broche 7 peut être constituée par un épaulement de celle-ci, l'autre butée 72 pouvant être constituée par une rondelle maintenue par un écrou.

Le fonctionnement du dispositif de l'invention, tel qu'il a été décrit jusqu'à présent, est le suivant.

Dans la mesure où les fluides hydrauliques sont très peu compressibles, la pression régnant à chaque instant dans le volume 2 est également la pression qui règne dans chaque interstice radial 22, dans les canaux 40, et dans la chambre 310.

De même, la pression régnant à chaque instant dans le volume 1 est également la pression qui règne dans l'interstice annulaire 11, dans les canaux 50, et dans la chambre 320.

Ainsi, lorsque la pression du fluide hydraulique dans le volume 2 augmente jusqu'à un point où la force qu'exerce cette pression dans la chambre 310 dépasse la force élastique avec laquelle l'obturateur 41 est appuyé sur le siège de clapet 311, cet obturateur est déplacé par le fluide présent dans la chambre 310 et autorise ainsi le passage d'un certain volume de ce fluide du volume 2 vers le volume 1.

De façon semblable, lorsque la pression du fluide hydraulique dans le volume 1 augmente jusqu'à un point où la force qu'exerce cette pression dans la chambre 320 dépasse la force élastique avec laquelle l'obturateur 52 est appuyé sur le siège de clapet 322, cet obturateur est déplacé par le fluide présent dans la chambre 320 et autorise ainsi le passage d'un certain volume de ce fluide du volume 1 vers le volume 2.

Comme le déplacement des obturateurs 41 et 52 et le laminage du fluide passant entre ces obturateurs et les sièges de clapets correspondants exigent une quantité d'énergie non nulle, le dispositif décrit amortit les oscillations de pression entre les volumes de fluide 1 et 2.

En dépit de la simplicité de sa structure, ce dispositif permet de régler indépendamment l'une de l'autre les pressions qui conduisent respectivement au déplacement des obturateurs 41 et 52, ce réglage pouvant notamment être obtenu, par exemple, par le choix du diamètre interne des chambres 310 et 320, par l'épaisseur des obturateurs 41 et 52, et par le nombre de disques de maintien en contrainte, ainsi que leurs diamètres et leurs épaisseurs respectives.

Bien que les obturateurs et les disques soient a priori réalisés en acier, il n'est pas non plus exclu d'utiliser d'autres matériaux, et / ou des aciers de nuances différentes pour les clapets supérieur et inférieur.

Enfin, il est possible de privilégier l'un par rapport à l'autre les flux croisés entre le volume 1 et le volume 2 en augmentant la surface totale des canaux de la série correspondante de canaux 40 ou 50 par rapport à la surface totale des canaux de l'autre série 50 ou 40.

Les figures 3 et 4 représentent deux variantes du dispositif de l'invention qui permettent une différentiation de l'amortissement à basse vitesse selon que la différence entre les pressions régnant dans les volumes 1 et 2 est positive ou négative.

Le principe général de ces variantes repose sur l'utilisation d'un clapet anti-retour additionnel logé dans l'une des chambres, par exemple dans la première chambre 310, de préférence combiné à un passage basse vitesse 330, percé dans l'un au moins des sièges annulaires 311 et / ou 322, et remplissant la fonction d'une fuite qui fait communiquer entre eux, de façon permanente, les premier et second volumes de fluide 1 et 2.

Comme il est dit auparavant, l'amortissement basse vitesse suppose l'emploi de clapets anti-retour faiblement tarés, le clapet anti-retour additionnel s'ouvrant donc beaucoup plus facilement que les clapets formés par les obturateurs principaux 41 et 52.

La première variante, illustrée à la figure 3, est applicable au cas où l'amortissement en compression doit être inférieur à l'amortissement en détente, c'est-à-dire au cas où les surpressions du volume inférieur 2 doivent être moins amorties que les surpressions du volume supérieur 1.

Dans ce cas, le clapet anti-retour additionnel, qui appartient ainsi aux moyens de clapet anti-retour du premier type, comprend des troisièmes sièges de clapets, tels que 240, dont chacun entoure l'un des canaux de la première série 40, un troisième obturateur 220 qui est élastiquement sollicité vers les troisièmes sièges 240, et un ou plusieurs orifices tels que 410, qui sont percés dans le premier obturateur 41 et qui font communiquer la première chambre 310 avec le premier volume de fluide 1.

Ainsi, en cas de surpression du volume inférieur 2, le fluide issu ce dernier traverse les canaux 40, atteint la chambre 310 après avoir déplacé l'obturateur 220, et sort de la chambre 310 en traversant les orifices tels 410, le déplacement de l'obturateur 220 ne requérant qu'une dépense d'énergie relativement faible par rapport à celle que requerrait le déplacement de l'obturateur 41.

Comme le montre la figure 3, la sollicitation élastique à laquelle est soumis le troisième obturateur 220 peut être développée par un ressort en lame 230 qui applique cet obturateur 220 vers les troisièmes sièges 240.

La seconde variante, illustrée à la figure 4, est applicable au cas où l'amortissement en compression doit être supérieur à l'amortissement en détente, c'est-à-dire au cas où les surpressions du volume inférieur 2 doivent être plus amorties que les surpressions du volume supérieur 1.

Dans ce cas, le clapet anti-retour additionnel, qui appartient ainsi aux moyens de clapet anti-retour du second type, comprend un ou plusieurs orifices, tels que 410, qui sont percés dans le premier obturateur 41 pour faire communiquer la première chambre 310 avec le premier volume 1 de fluide, et un quatrième obturateur 420, qui est élastiquement sollicité vers le premier obturateur 41 en regard de chaque orifice 410.

Ainsi, en cas de surpression du volume supérieur 1, le fluide issu ce dernier traverse les orifices tels 410 en déplaçant l'obturateur 420, pénètre dans la chambre 310, et en ressort par les canaux 40 pour atteindre le volume inférieur 1, le déplacement de l'obturateur 420 ne requérant qu'une dépense d'énergie relativement faible par rapport à celle que requerrait le déplacement de l'obturateur 52.

## Revendications

1. Dispositif d'amortissement à laminage hydraulique pour amortir des oscillations de pression s'exerçant entre des premier et second volumes (1, 2) de fluide hydraulique, ce dispositif comprenant un séparateur cylindrique (3) présentant un axe principal (X) et portant des moyens de clapet anti-retour tarés de premier et second types à flux mutuellement croisés et un palier d'étanchéité périphérique (6) de premier diamètre (D1) séparant les deux volumes de fluide (1, 2), les moyens de clapet du premier type comprenant une première série de canaux (40) traversant le séparateur (3) et un premier obturateur (41) à lame flexible disposé dans le premier volume de fluide (1) et élastiquement sollicité vers une première face axiale (31) du séparateur (3), et les moyens de clapet du second type comprenant une seconde série de canaux (50) traversant le séparateur (3) et un second obturateur (52) à lame flexible disposé dans le second volume de fluide (2) et élastiquement sollicité vers une seconde face axiale (32) du séparateur (3), **caractérisé en ce que** les première et seconde faces axiales (31, 32) du séparateur (3) sont creusées pour définir des première et seconde chambres respectives (310, 320) bordées par des premier et second sièges annulaires respectifs de clapet (311, 322), qui présentent un diamètre maximal (D) inférieur au premier diamètre (D1), et sur lesquels s'appuient respectivement les premier et second obturateurs (41, 52), **en ce que** les canaux (40) de la première série relient la première chambre (310) à des interstices radiaux (22) s'ouvrant dans le second volume de fluide (2) entre le second obturateur (52) et le palier (6), **en ce que** les canaux (50) de la seconde série relient la seconde chambre (320) à un interstice annulaire (11) s'ouvrant dans le premier volume de fluide (1) entre le premier obturateur (41) et le palier (6), et **en ce que** le séparateur (3) comprend un corps cylindrique (30) traversé par les canaux (40, 50) et un couvercle rapporté (300), ce couvercle étant appliqué sur le corps cylindrique (30), définissant la première ou la seconde chambre (320), et étant traversé par au moins un perçage (302) reliant cette chambre (320) aux canaux (50) de la première ou de la seconde série de canaux (40, 50).

2. Dispositif d'amortissement suivant la revendication 1, **caractérisé en ce qu'**il comprend un clapet anti-retour additionnel (220, 230, 240, 410; 410, 420) logé dans l'une des chambres (310, 320).

3. Dispositif d'amortissement suivant la revendication 2, **caractérisé en ce que** le clapet anti-retour additionnel (220, 230, 240, 410; 311, 420) est logé dans la première chambre (310).

4. Dispositif d'amortissement suivant la revendication 3, **caractérisé en ce que** le clapet anti-retour additionnel appartient aux moyens de clapet anti-retour du premier type et comprend des troisièmes sièges de clapets (240) dont chacun entoure l'un des canaux de la première série (40), un troisième obturateur (220) élastiquement sollicité vers les troisièmes sièges (240), et au moins un orifice (410) percé dans le premier obturateur (41) et faisant communiquer la première chambre (310) avec le premier volume (1).

5. Dispositif d'amortissement suivant la revendication 4, **caractérisé en ce que** le clapet anti-retour additionnel comprend un ressort en lame (230) appliquant le troisième obturateur (220) vers les troisièmes sièges (240).

6. Dispositif d'amortissement suivant la revendication 3, **caractérisé en ce que** le clapet anti-retour additionnel appartient aux moyens de clapet anti-retour du second type et comprend au moins un orifice (410) percé dans le premier obturateur (41) et faisant communiquer la première chambre (310) avec le premier volume (1), et un quatrième obturateur (420) élastiquement sollicité vers le premier obturateur (41) en regard de chaque orifice (410).

7. Dispositif d'amortissement suivant l'une quelconque des revendications précédentes, **caractérisé en ce qu'**il comprend en outre un moyen de fuite permanente, comprenant un passage de fuite (330) percé dans l'un au moins des premier et second sièges annulaires (311, 322) et faisant communiquer les premier et second volumes entre eux (1, 2) de façon permanente.

8. Dispositif d'amortissement suivant l'une quelconque des revendications précédentes, **caractérisé en ce que** les première et seconde séries de canaux (40, 50) sont réparties sur au moins deux rangées autour de l'axe principal (X).

9. Dispositif d'amortissement suivant l'une quelconque des revendications précédentes, **caractérisé en ce que** les premier et second obturateurs (41, 52) sont appliqués sur les premier et second sièges annulaires respectifs de clapet (311, 322) par une précontrainte élastique que leur imprime une broche de maintien sous contrainte (7) traversant axialement le séparateur (3) et les obturateurs (41, 52), et portant des première et seconde butées (71, 72) qui contraignent les deux obturateurs (41, 52) à se rapprocher l'un de l'autre.

10. Dispositif d'amortissement suivant l'une quelconque des revendications précédentes, **caractérisé en ce qu'**il comprend en outre au moins des premier et second disques de maintien sous contrainte (81, 82, 83, 84) élastiquement flexibles et respectivement superposés aux premier et second obturateurs (41, 52), chaque disque (81, 82, 83, 84) étant coaxial à l'obturateur (41, 52) respectif, élastiquement appliqué contre lui, de diamètre inférieur ou égal au diamètre de l'obturateur respectif (41, 52), et externe à la chambre (310, 320) obturée par l'obturateur respectif (41, 52).

11. Dispositif d'amortissement suivant les revendications 9 et 10, **caractérisé en ce que** les disques de maintien sous contrainte (81, 82, 83, 84), les obturateurs (41, 52), le corps cylindrique (30) et le couvercle rapporté (300) sont enserrés entres les première et seconde butées (71, 72) sous contrainte élastique par flexion des obturateurs (41, 52) et des disques (81, 82, 83, 84).

12. Dispositif d'amortissement suivant l'une quelconque des revendications précédentes, **caractérisé en ce que** les premier et second sièges annulaires de clapet (311, 322) sont conformés en couronnes circulaires.

13. Dispositif d'amortissement suivant l'une quelconque des revendications précédentes, **caractérisé en ce que** le couvercle rapporté (300) présente une symétrie axiale afin de ne pas nécessiter d'indexage angulaire lors de l'assemblage.

## Patentansprüche

1. Hydraulische Dämpfungsvorrichtung mit Drosselung zum Dämpfen von Druckschwankungen, die zwischen einem ersten und einem zweiten Hydraulikflüssigkeitsvolumen (1, 2) ausgeübt werden, wobei diese Vorrichtung eine zylindrische Trenneinrichtung (3) enthält, die eine Hauptachse (X) aufweist und kalibrierte Rückschlagventilmittel erster und zweiter Art mit sich gegenseitig kreuzenden Strömungen und ein umlaufendes Dichtlager (6) mit einem ersten Durchmesser (D1) trägt, das die beiden Flüssigkeitsvolumen (1, 2) trennt, wobei die Ventilmittel erster Art eine erste Reihe von Kanälen (40) aufweisen, welche die Trenneinrichtung (3) durchsetzen, sowie einen ersten flexiblen Klappenverschluss (41), der in dem ersten Flüssigkeitsvolumen (1) angeordnet ist und elastisch zu einer ersten axialen Fläche (31) der Trenneinrichtung (3) hin beaufschlagt wird, und die Ventilmittel zweiter Art eine zweite Reihe von Kanälen (50) aufweisen, welche die Trenneinrichtung (3) durchsetzen, sowie einen zweiten flexiblen Klappenverschluss (52), der in dem zweiten Flüssigkeitsvolumen (2) angeordnet ist und elastisch zu einer zweiten axialen Fläche (32) der Trenneinrichtung (3) hin beaufschlagt wird, **dadurch gekennzeichnet, dass** die erste und die zweite axiale Fläche (31, 32) der Trenneinrichtung (3) vertieft ausgeführt sind, um jeweils eine erste bzw. zweite Kammer (310, 320) zu definieren, die jeweils von einem ersten bzw. zweiten ringförmigen Ventilsitz (311, 322) eingefasst werden, die einen maximalen Durchmesser (D) aufweisen, der kleiner ist als der erste Durchmesser (D1), und an denen jeweils der erste bzw. der zweite Verschluss (41, 52) anliegt, dass die Kanäle (40) der ersten Reihe die erste Kammer (310) mit radialen Zwischenräumen (22) verbinden, die sich in das zweite Flüssigkeitsvolumen (2) zwischen dem zweiten Verschluss (52) und dem Lager (6) öffnen, dass die Kanäle (50) der zweiten Reihe die zweite Kammer (320) mit einem ringförmigen Zwischenraum (11) verbinden, der sich in das erste Flüssigkeitsvolumen (1) zwischen dem ersten Verschluss (41) und dem Lager (6) öffnet, und dass die Trenneinrichtung (3) einen von den Kanälen (40, 50) durchsetzten zylindrischen Körper (30) und einen angesetzten Deckel (300) aufweist, wobei dieser Deckel am zylindrischen Körper (30) anliegt, die erste bzw. die zweite Kammer (320) definiert und von zumindest einer Bohrung (302) durchsetzt wird, welche diese Kammer (320) mit den Kanälen (50) der ersten bzw. zweiten Reihe von Kanälen (40, 50) verbindet.

2. Dämpfungsvorrichtung nach Anspruch 1, **dadurch gekennzeichnet, dass** sie ein zusätzliches Rückschlagventil (220, 230, 240, 410; 410, 420) enthält, das in einer der Kammern (310, 320) aufgenommen ist.

3. Dämpfungsvorrichtung nach Anspruch 2, **dadurch gekennzeichnet, dass** das zusätzliche Rückschlagventil (220, 230, 240, 410; 311, 420) in der ersten Kammer (310) aufgenommen ist.

4. Dämpfungsvorrichtung nach Anspruch 3, **dadurch gekennzeichnet, dass** das zusätzliche Rückschlagventil zu den Rückschlagventilmitteln der ersten Art gehört und dritte Ventilsitze (240) aufweist, von denen jeder einen der Kanäle der ersten Reihe (40) umgibt, sowie einen dritten Verschluss (220), der elastisch zu den dritten Sitzen (240) beaufschlagt wird, und zumindest eine Öffnung (410), die in den ersten Verschluss (41) eingebracht ist und die erste Kammer (310) mit dem ersten Volumen (1) in Verbindung setzt.

5. Dämpfungsvorrichtung nach Anspruch 4, **dadurch gekennzeichnet, dass** das zusätzliche Rückschlagventil eine Blattfeder (230) enthält, welche den dritten Verschluss (220) zu den dritten Sitzen (240) hin drückt.

6. Dämpfungsvorrichtung nach Anspruch 3, **dadurch gekennzeichnet, dass** das zusätzliche Rückschlagventil zu den Rückschlagventilmitteln der zweiten Art gehört und zumindest eine Öffnung (410) aufweist, die in den ersten Verschluss (41) eingebracht ist und die erste Kammer (310) mit dem ersten Volumen (1) in Verbindung setzt, sowie jeder Öffnung (410) gegenüberliegend einen vierten Verschluss (420), der elastisch zu dem ersten Verschluss (41) hin beaufschlagt wird.

7. Dämpfungsvorrichtung nach einem der vorangehenden Ansprüche, **dadurch gekennzeichnet, dass** sie femer ein Dauerausströmmittel enthält, das einen Ausströmdurchgang (330) aufweist, der in zumindest einem des ersten bzw. zweiten ringförmigen Ventilsitzes (311, 322) ausgeführt ist und das erste und das zweite Volumen (1, 2) in dauerhafter Weise miteinander in Verbindung setzt.

8. Dämpfungsvorrichtung nach einem der vorangehenden Ansprüche, **dadurch gekennzeichnet, dass** die erste und die zweite Reihe von Kanälen (40, 50) auf zumindest zwei Linien um die Hauptachse (X) herum verteilt sind.

9. Dämpfungsvorrichtung nach einem der vorangehenden Ansprüche, **dadurch gekennzeichnet, dass** der erste und der zweite Verschluss (41, 52) an den ersten bzw. zweiten ringförmigen Ventilsitz (311, 322) jeweils mit einer elastischen Vorspannung angedrückt werden, die ihnen von einer vorgespannten Haltespindel (7) aufgeprägt wird, die axial die Trenneinrichtung (3) und die Verschlüsse (41, 52) durchsetzt und einen ersten und einen zweiten Anschlag (71, 72) trägt, welche die beiden Verschlüsse (41, 52) zwingen, sich einander anzunähern.

10. Dämpfungsvorrichtung nach einem der vorangehenden Ansprüche, **dadurch gekennzeichnet, dass** sie ferner zumindest eine erste und eine zweite vorgespannte Haltescheibe (81, 82, 83, 84) enthält, die elastisch biegsam sind und jeweils dem ersten bzw. zweiten Verschluss (41, 52) überlagert sind, wobei jede Scheibe (81, 82, 83, 84) koaxial zum jeweiligen Verschluss (41, 52) verläuft, elastisch an diesen angedrückt wird, im Durchmesser kleiner oder gleich dem Durchmesser des jeweiligen Verschlusses (41, 52) ist und außerhalb der Kammer (310, 320) liegt, die von dem jeweiligen Verschluss (41, 52) verschlossen wird.

11. Dämpfungsvorrichtung nach Anspruch 9 und 10, **dadurch gekennzeichnet, dass** die vorgespannten Haltescheiben (81, 82, 83, 84), die Verschlüsse (41, 52), der zylindrische Körper (30) und der angesetzte Deckel (300) unter elastischer Vorspannung durch Biegung der Verschlüsse (41, 52) und der Scheiben (81, 82, 83, 84) zwischen dem ersten und dem zweiten Anschlag (71, 72) eingeklemmt werden.

12. Dämpfungsvorrichtung nach einem der vorangehenden Ansprüche, **dadurch gekennzeichnet, dass** der erste und der zweite ringförmige Ventilsitz (311, 322) zu kreisrunden Ringen geformt sind.

13. Dämpfungsvorrichtung nach einem der vorangehenden Ansprüche, **dadurch gekennzeichnet, dass** der angesetzte Deckel (300) eine axiale Symmetrie aufweist, um bei der Montage keine Winkelindexierung erforderlich zu machen.

## Claims

1. Hydraulic constriction type damping device for damping oscillations in pressure between first and second volumes (1, 2) of hydraulic fluid, the said device comprising a cylindrical separator (3) possessing a principal axis (X) and carrying calibrated non-return valve means of crossed-flow first and second types and a peripheral seal bearing (6) with a first diameter (D1) separating the two volumes of fluid (1, 2), the valve means of the first type comprising a first series of passageways (40) through the separator (3) and a first flexible-leaf shutter (41) arranged in the first volume of fluid (1) and elastically urged towards a first axial face (31) of the separator (3), and the valve means of the second type comprising a second series of passageways (50) through the separator (3) and a second flexible-leaf shutter (52) arranged in the second volume of fluid (2) and elastically urged towards a second axial face (32) of the separator (3), **characterized in that** the first and second axial faces (31, 32) of the separator (3) are hollowed out to define respective first and second chambers (310, 320) bordered by respective first and second annular valve seats (311, 322) which have a maximum diameter (D) less than the first diameter (D1) and on which the first and second shutters (41, 52) respectively bear, **in that** the passageways (40) of the first series connect the first chamber (310) to radial interstices (22) communicating with the second volume of fluid (2) between the second shutter (52) and the bearing (6), **in that** the passageways (50) of the second series connect the second chamber (320) to an annular interstice (11) communicating with the first volume of fluid (1) between the first shutter (41) and the bearing (6), and **in that** the separator (3) comprises a cylindrical body (30) traversed by the passageways (40, 50) and an added cover (300), this cover being brought to bear on the cylindrical body (30), defining the first or second chamber (320), and being traversed by at least one bore (302) connecting this chamber (320) to the passageways (50) of the first or second series of passageways (40, 50).

2. Damping device according to Claim 1, **characterized in that** it comprises an additional non-return valve (220, 230, 240, 410; 410, 420) accommodated in one of the chambers (310, 320).

3. Damping device according to Claim 2, **characterized in that** the additional non-return valve (220, 230, 240, 410; 311, 420) is accommodated in the first chamber (310).

4. Damping device according to Claim 3, **characterized in that** the additional non-return valve belongs with the non-return valve means of the first type, and comprises third valve seats (240) each surrounding one of the first series of passageways (40), a third shutter (220) elastically urged towards the third seats (240), and at least one orifice (410) in the first shutter (41) putting the first chamber (310) in communication with the first volume (1).

5. Damping device according to Claim 4, **characterized in that** the additional non-return valve comprises a leaf spring (230) urging the third shutter (220) towards the third seats (240).

6. Damping device according to Claim 3, **characterized in that** the additional non-return valve belongs with the non-return valve means of the second type, and comprises at least one orifice (410) in the first shutter (41) putting the first chamber (310) in communication with the first volume (1), and a fourth shutter (420) elastically urged towards the first shutter (41) in register with each orifice (410).

7. Damping device according to any one of the preceding claims, **characterized in that** it also comprises a permanent bleed means comprising a bleed passage (330) bored in at least one of the first and second annular seats (311, 322) and putting the first and second volumes (1, 2) permanently in communication with each other.

8. Damping device according to any one of the preceding claims, **characterized in that** the first and second series of passageways (40, 50) are distributed in at least two rows around the principal axis (X).

9. Damping device according to any one of the preceding claims, **characterized in that** the first and second shutters (41, 52) are brought to bear on the respective first and second annular valve seats (311, 322) by an elastic bias imparted to them by a constrained keeper pin (7) axially traversing the separator (3) and shutters (41, 52) and carrying first and second abutments (71, 72) which constrain the two shutters (41, 52) to move towards each other.

10. Damping device according to any one of the preceding claims, **characterized in that** it also comprises at least first and second elastically flexible, constrained keeper discs (81, 82, 83, 84) respectively superimposed on the first and second shutters (41, 52), each disc (81, 82, 83, 84) being coaxial with the respective shutter (41, 52), and elastically brought to bear thereon; of a diameter less than or equal to the diameter of the respective shutter (41, 52); and external to the chamber (310, 320) closed off by the respective shutter (41, 52).

11. Damping device according to Claims 9 and 10, **characterized in that** the constrained keeper discs (81, 82, 83, 84), the shutters (41, 52), the cylindrical body (30) and the added cover (300) are gripped between the first and second abutments (71, 72) under elastic constraint through the flexing of the shutters (41, 52) and discs (81, 82, 83, 84).

12. Damping device according to any one of the preceding claims, **characterized in that** the first and second annular valve seats (311, 322) are configured as circular rims.

13. Damping device according to any one of the preceding claims, **characterized in that** the added cover (300) possesses axial symmetry so that angular orientation on assembly is unnecessary.
